**Europäisches Patentamt**

**European Patent Office**

**Office européen des brevets**

(19)

(11) Numéro de publication : **0 392 891 B1**

# FASCICULE DE BREVET EUROPEEN

(12)

(45) Date de publication du fascicule du brevet :
04.05.94 Bulletin 94/18

(51) Int. Cl.⁵ : **B60G 3/26**

(21) Numéro de dépôt : **90400751.5**

(22) Date de dépôt : **20.03.90**

(54) **Suspension pour véhicules automobiles.**

(30) Priorité : **11.04.89 FR 8904766**

(43) Date de publication de la demande :
**17.10.90 Bulletin 90/42**

(45) Mention de la délivrance du brevet :
**04.05.94 Bulletin 94/18**

(84) Etats contractants désignés :
**DE ES GB IT**

(56) Documents cités :
**EP-A- 0 172 999**

(56) Documents cités :
**EP-A- 0 193 090**
**EP-A- 0 193 847**
**EP-A- 0 288 654**
**EP-A- 0 302 226**
**US-A- 4 564 213**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Veneau, Jean**
**21, Domaine de la Côte Noire**
**F-92500 Rueil-Malmaison (FR)**

Jouve, 18, rue Saint-Denis, 75001 PARIS

## Description

La présente invention se rapporte à une suspension pour véhicules automobiles du type ou double triangle dans laquelle la cinématique de la suspension est auto-convergente et dont l'épure de débattement des roues provoque une courbe de variation de pince en forme de cloche.

Pour des raisons évidentes, le comportement routier d'une voiture est beaucoup plus sécurisant lorsqu'il donne au véhicule un caractère "sous-vireur". Les constructeurs automobiles savent depuis longtemps qu'en donnant de la "pince", c'est-à-dire en faisant converger d'un très petit angle les roues arrière vers l'avant du véhicule, on exerce une influence favorable sur la tenue de route.

Une solution consiste à donner du pincement statique par le réglage initial du train arrière. Mais comme les roues sont reliées à la caisse par des bras de suspension ou des ensembles de bielles qui oscillent dans des paliers élastiques destinés à filtrer les petits chocs de roulement, la géométrie de débattement de ces bras n'est plus respectée et l'effet de pince disparaît. De même, la géométrie peut évoluer avec le débattement et détruire ainsi le réglage recherché.

La publication EP 0 193 090 décrit une suspension à trois barres, comportant deux biellettes transversales qui relient le porte-roue au châssis et un bras longitudinal raccordé au châssis et aux deux biellettes. Selon ce document, le déplacement longitudinal de la roue est obtenu grâce aux articulations élastiques de montage élastique sur le châssis, d'un berceau intermédiaire assurant la liaison entre les biellettes et le châssis.

On connaît par ailleurs des suspensions arrière à trois barres bénéficiant d'une certaine élasticité sans avoir recours à un berceau intermédiaire. La publication JP-U-5 542 679 décrit à ce sujet une suspension arrière de véhicule comportant une biellette transversale avant et une biellette transversale arrière, et un tirant longitudinal relié à la structure et au porte-roue par deux articulations élastiques.

Selon la figure 2 de ce document, les deux biellettes rigides et de longueur inégale convergent en un point situé à l'extérieur du véhicule et en arrière de l'axe de la roue. Le tirant longitudinal, l'axe joignant les articulations des deux biellettes sur le châssis et l'axe joignant les articulations des deux biellettes sur le porte-roue, sont sensiblement parallèles à l'axe longitudinal du véhicule. Comme indiqué plus haut, les articulations élastiques sont garantes de l'élasticité de la suspension sans avoir recours à un berceau intermédiaire. En revanche, la disposition relative du tirant longitudinal et des différentes articulations ne permet pas d'optimiser la variation de la pince souhaitée.

La présente invention, propose une suspension permettant de faire varier la pince des roues arrières de telle sorte qu'elle soit maximum, dans les circonstances qui exigent la plus grande stabilité du véhicule.

L'invention concerne une suspension pour véhicules automobiles du type à trois barres particulièrement adaptée à un train arrière, comprenant un porte-roue relié à la structure du véhicule au moyen d'une biellette avant et d'une biellette arrière rigides et de longueur inégale, convergeant en un point situé à l'extérieur du véhicule et en arrière de l'axe de la roue, et au moyen d'un tirant longitudinal articulé sur le porte-roue et sur la structure par l'intermédiaire de deux articulations constituées par un tampon de matériau élastique.

Cette suspension est caractérisée en ce que la biellette arrière est plus longue que la biellette avant, et en ce que l'articulation du tirant longitudinal sur le châssis est alignée avec les articulations respectives des biellettes sur le châssis.

L'invention sera mieux comprise à la lecture de la description suivante d'un mode de réalisation particulier de celle-ci, en liaison avec les dessins annexés sur lesquels :
- la figure 1 est une vue en plan d'un train arrière selon l'état de la technique antérieure,
- la figure 2 représente la courbe d'évolution de l'angle de pince d'un train arrière,
- la figure 3 est une vue en plan d'un train arrière selon l'invention,
- la figure 4 représente la courbe d'évolution de l'angle de pince du train arrière selon l'invention.

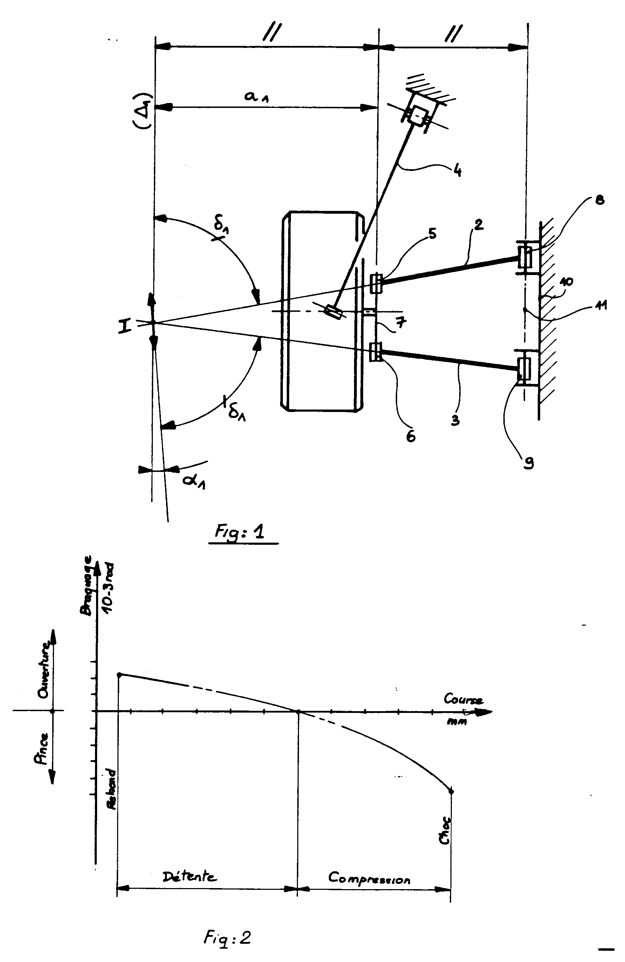

Considérons la suspension selon l'état l'état antérieur de la technique illustrée sur la figure 1, et correspondant à un train arrière non moteur avec une triangulation inférieure à deux biellettes convergentes de longueurs égales 2-3, et tirant longitudinal de longueur variable (4) autorisant un recul de la roue sous sollicitation longitudinale. Ce degré de liberté longitudinal est destiné à filtrer les chocs supportés par le porte-roue. Les braquages induits par ces chocs, ou les efforts de freinage, ne doivent pas modifier la position du plan de la roue défini par l'épure de débattement.

On remarque que les constructions actuelles présentent les inconvénients suivants :

- La courbe de prise de pince est très "sous-vireur" (voir la figure 2)

L'angle de braquage de la roue évolue fortement vers la pince pendant la compression verticale. Cette variation est inversée pendant la détente et la roue prend alors de l'ouverture : cette forme d'évolution de pince est une cause d'instabilité du véhicule lors du freinage.

- Le faible déplacement du centre instantané de rotation (point "I") pendant le recul de la roue.

Par la construction de BOBILLER, on peut déterminer la tangente à la courbe du déplacement du point "I" pendant le mouvement longitudinal de la roue.

Lorsque les articulations 5 et 6 des biellettes sur le porte roue 1 sont sur le même axe 7, et que les articulations 8 et 9 desdites biellettes sur le chassis 10 du véhicule sont sur le même axe 11, la droite de BOBILLER est parallèle aux articulations 5, 6 et 8, 9.

L'angle "$\delta_1$" détermine la tangente commune à la "base" et à la "roulante" du mouvement plan sur plan. On voit sur la figure 1 que l'angle $\alpha$, (angle de cette tangente avec l'axe longitudinal est faible) car la distance a1 varie très faiblement au cours du débattement et n'accentue pas le phénomène de pincement qui peut être annulé par les déformations des biellettes et de leurs articulations.

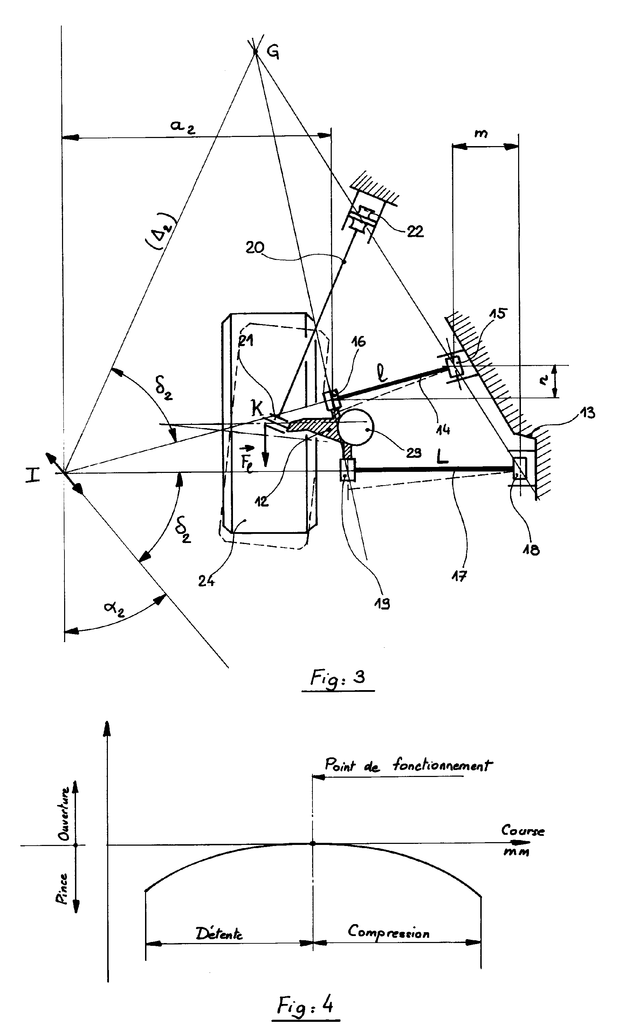

La suspension selon l'invention et qui est représentée à la figure 3 comprend :

- Une triangulation inférieure à trois barres qui permet de relier le porte roue 12 au chassis 13 du véhicule et qui comprend :

    . une biellette transversale avant 14, de longueur "I", positionnée en avant du plan transversal contenant le centre de roue, et qui a son articulation 15 sur le chassis 13 situé plus en avant que son articulation 16 sur le porte roue 12, d'une valeur "n".

    . une biellette transversale arrière 17, de longueur "L", positionnée en arrière et parallèle à un plan transversal et vertical contenant l'axe de roue, et qui a son articulation 18 sur le chassis 13 plus près de l'axe du véhicule que l'articulation 15, d'une valeur "m". Elle est articulée en 19 sur le porte roue 12.

    . une bielle longitudinale 20 relie le porte roue 12 au moyen d'une articulation 21 au chassis 13 au moyen d'une articulation 22. Les bielles transversales avant 14, arrière 17 et la bielle longitudinale 20 ne peuvent pas être comprises dans le même plan.

    . un amortisseur 23 ou un triangle supérieur relie le porte roue 12 au chassis 13.

Par sa conception, cette bielle longitudinale 20 possède une raideur faible (30 daN/mm) par rapport à la raideur des biellettes transversales 14 et 17 (800 daN/mm), ce qui autorise un déplacement longitudinal de la roue d'une valeur atteignant 6 mm. Pratiquement, l'articulation 22 de la liaison avec le chassis 13 de l'une de ces bielles longitudinales 20, se fait par un tampon de matériau de forme optimisée à faible raideur radiale.

Sous un effort longitudinal "F1" appliqué au centre "K" de la roue, la distance 21, 22 s'allonge sous la faible raideur en traction compression de la bielle longitudinale 20. La zone de raideur contrôlée "k" de la bielle longitudinale 20 peut être localisée dans la conception particulière de l'articulation 22. Cet allongement provoque un déplacement longitudinal de la roue.

Lorsque la roue recule sous un effort longitudinal provoqué, par exemple, par le freinage du véhicule (les roues arrières retiennent le véhicule et par conséquent, reculent relativement au véhicule), on voit que le porte roue 12 amorce un mouvement de rotation :

- d'une part, autour de l'articulation 15 et du rayon "I",
- d'autre part, autour de l'articulation 18 et du rayon "L".

Le point "I" de convergence des bielles 14 et 17 représente le centre instantané de rotation de la roue par rapport au chassis 13.

L'intersection des lignes passant par les articulations 16, 19 et 15, 18 détermine le point "G" qui avec le point "I" détermine la droite de BOBILLER "$\Delta_2$" entraînant l'angle $\delta_2$ qui est l'angle de la tangente de la trajectoire du point "I" pendant le mouvement de recul de la roue.

Un tel aménagement des éléments de la suspension a pour but :

- d'obtenir une tangente la plus parallèle possible au plan transversal, donc un angle $\delta_2$ le plus petit possible, cela grâce au rapport des longueurs des bielles transversales 14 et 17, puisqu'elles positionnent le point "G" (dans la figure 1, le point "G" est rejeté à l'infini. Dans la figure 3, le point "G" se rapproche au maximum de la roue, d'une façon compatible avec l'épure de roue en pompage).

- d'obtenir de façon presque naturelle, une courbe de variation de pince en "cloche" qui permet d'augmenter le pincement total des roues arrières en phase de délestage, lors d'un freinage par exemple. (La courbe de pince illustrée sur la figure 4 montre bien l'évolution de la pince des roues avec le débattement de part et d'autre de la position normale de fonctionnement. On voit bien que la pince augmente (dans le cas du recul de la roue) quelle que soit la position en hauteur de la suspension :

    . en cas de freinage en ligne droite, les deux roues sont délestées et prennent alors de la pince,

    . en cas de freinage dans un virage, la roue extérieure à la courbe de la route est comprimée et prend de la pince, et la roue intérieure à la courbe de la route est délestée et prend elle aussi de la pince),

    . par un rapport de longueur $\frac{\ell}{L}$ proche de 0,8, des bielles 14 et 17, on augmente la convergence et on rapproche le point "I" de la roue pendant le recul de celle-ci, et ceci d'autant plus que la cote "$a_2$" sera faible et l'angle $a_2$ important.

## Revendications

1. Suspension pour véhicules automobiles du type à trois barres particulièrement adaptée à un train arrière, comprenant un porte-roue (12) relié à la structure (13) du véhicule au moyen d'une biellette avant (14) et d'une biellette arrière (17) rigides et de longueur inégale, convergeant en un point (I) situé à l'extérieur du véhicule et en arrière de l'axe de la roue, et au moyen d'un tirant longitudinal (20) articulé sur le porte-roue (12) et sur la structure (13) par l'intermédiaire de deux articulations (21,22) constituées par un tampon de matériau élastique, caractérisé en ce que la biellette arrière (17) est plus longue que la biellette avant (14), et en ce que l'articulation (22) du tirant longitudinal (20) sur le châssis (13) est alignée avec les articulations respectives (15, 18) des biellettes avant et arrière (14, 17) sur le châssis (13).

2. Suspension selon la revendication 1, caractérisée en ce que la raideur k du tirant longitudinal est nettement plus faible que celle des biellettes avant (14) et arrière (17).

3. Suspension selon les revendications 1 ou 2, caractérisée en ce que la ligne passant par les articulations respectives (15, 18, 22) des biellettes avant et arrière (14, 17) et du tirant longitudinal (20) sur le châssis (13) converge avec la ligne passant par les articulations (16, 19) des biellettes (14, 17) sur le porte-roue en un point (G) situé à l'extérieur d'un plan longitudinal et vertical passant par l'articulation (16) de la biellette avant sur le porte-roue.

4. Suspension selon les revendications 1 à 4, caractérisée en ce que les biellettes avant et arrière (14, 17) et le tirant longitudinal (20) ne sont pas compris dans un même plan.

## Patentansprüche

1. Radaufhängung für Kraftfahrzeuge mit drei Trägern, die insbesondere für eine Hinterachse geeignet ist, mit einem Radträger (12), der mit dem Kraftfahrzeugaufbau (13) über einen vorderen steifen Querlenker (14) und einen hinteren steifen Querlenker (17) ungleicher Längen verbunden ist, die in Richtung eines Punktes (I) außerhalb des Kraftfahrzeuges und hinter der Radachse konvergieren und der über einen Längsarm (20) verbunden ist, der am Radträger (12) und am Aufbau (13) mittels zweier Gelenke (21, 22) angelenkt ist, welche aus einem Zapfen aus elastischem Material bestehen, dadurch gekennzeichnet, daß der hintere Querlenker (17) länger als der vordere Querlenker (14) ist und daß das Gelenk (22) des Längsarms (20) am Aufbau (13) mit den entsprechenden Gelenken (15, 18) der vorderen und hinteren Querlenker (14, 17) am Aufbau (13) fluchtet.

2. Radaufhängung nach Anspruch 1, dadurch gekennzeichnet, daß die Steifigkeit (k) des Längsarms deutlich geringer ist als diejenige der vorderen und hinteren Querlenker (14 und 17).

3. Radaufhängung nach Ansprüchen 1 oder 2, dadurch gekennzeichnet, daß die die entsprechenden Gelenke (15, 18, 22) der vorderen und hinteren Querlenker (14, 17) und des Längsarms (20) am Aufbau (13) durchsetzende Gerade sich mit der die Gelenke (16, 19) der Querlenker (14, 17) am Radträger durchsetzende Geraden in einem Punkt (G) schneidet, der außerhalb einer Längs- und Hochebene liegt, welche das Gelenk (16) des vorderen Querlenkers am Radträger durchsetzt.

4. Radaufhängung nach Ansprüchen 1 bis 3, dadurch gekennzeichnet, daß die vorderen und hinteren Querlenker (14, 17) und der Längsarm (20) nicht in derselben Ebene liegen.

## Claims

1. Suspension for automobile vehicles of the type with three bars, particularly adapted to a rear axle assembly, comprising a wheel holder (12) connected to the structure (13) of the vehicle by means of a front connecting rod (14) and a rear connecting rod (17) which are rigid and of unequal length, converging at a point (I) situated outside the vehicle and to the rear of the wheel axle and by means of a longitudinal strut (20) articulated on the wheel holder (12) and on the structure (13) by means of two articulations (21, 22) formed by a buffer of elastic material, characterized in that the rear connecting rod (17) is longer than the front connecting rod (14) and in that the articulation (22) of the longitudinal strut (20) on the chassis (13) is aligned with the respective articulations (15, 18) of the front and rear connecting rods (14, 17) on the chassis (13).

2. Suspension as claimed in claim 1, characterized in that the stiffness k of the longitudinal strut is much smaller than that of the front (14) and rear (17) connecting rods.

3. Suspension as claimed in claims 1 or 2, characterized in that the line passing through the respective articulations (15, 18, 22) of the front and rear connecting rods (14, 17) and of the longitudinal strut (20) on the chassis (13) converges with the line passing through the articulations (16, 19) of the connecting rods (14, 17) on the wheel holder at a point (G) disposed outside a longitudinal and vertical plane passing through the articulation (16) of the front connecting rod on the wheel holder.

4.  Suspension as claimed in claims 1 to 4, characterized in that the front and rear connecting rods (14, 17) and the longitudinal strut (20) are not contained in the same plane.

Fig: 1

Fig: 2

6

G

$a_2$

$m$

$(\Delta_2)$

22

20

15

$\delta_2$

21

16

$\ell$

$a$

K

14

13

23

$\vec{F_\ell}$

L

12

18

$\delta_2$

24

19

17

$\alpha_2$

I

_Fig: 3_

Point de fonctionnement

Ouverture

Course
mm

Pince

Détente

Compression

_Fig: 4_